# EUROPEAN PATENT APPLICATION

(11) **EP 4 691 894 A1**
(43) Date of publication of application: **11.02.2026**
(21) Application number: 24201269.8
(22) Date of filing: 19.09.2024
(51) Int. Cl.: B62J 43/13, B60L 50/20, B60L 58/27, B62M 6/45, B62M 6/60, B62J 45/41, B62M 6/50

(54) **ELECTRIC BICYCLE AND METHOD FOR CONTROLLING PEDAL RESPONSE OF ELECTRIC BICYCLE**

(30) Priority: 06.08.2024 KR 20240104788
(71) Applicant: HL Mando Corporation, Pyeongtaek-si, Gyeonggi-do 17962 (KR)
(72) Inventor: KIM, Myoungjune, 17962 Pyeongtaek-si, Gyeonggi-do (KR); MUELLER, Jens, 65936 Frankfurt am Main (DE)
(74) Representative: BCKIP Part mbB

(57) **Abstract**

Disclosed are an electric bicycle that includes a drive motor that provides a rotational force to a drive wheel, a battery that supplies power to the drive motor, a pedal alternator that is electrically connected to the drive motor and the battery and provides a pedal reaction force to a driver and converts pedal kinetic energy of the driver into electric energy, and a heating device that is electrically connected to the pedal alternator and is installed on the battery side and is provided to heat the battery when the bicycle is driven, and a method for controlling pedal response of an electric bicycle.

## Description

### BACKGROUND

### Field

The present disclosure relates to an electric bicycle and a method for controlling pedal response of an electric bicycle, and more particularly, to an electric bicycle capable of easily controlling pedal response even in an environment where power generated by a pedal alternator is not consumed by a drive motor and a battery to provide comfort to a driver and enhance driving stability, and a method for controlling pedal response of an electric bicycle.

### Description of the Related Art

In general, a bicycle includes a front wheel, which is a steering wheel, and a rear wheel, which is a drive wheel that are disposed in a straight line at the front and rear of a frame, and is configured so that a rider steps on a pedal linked to the rear wheel to rotate the rear wheel, thereby moving the bicycle forward.

In the bicycle, a power transmission device such as a chain or a bevel gear is installed to transmit power generated by the pedal to the rear wheel. In particular, a chain-type power transmission device includes a driving sprocket wheel that is installed on one side of the pedal, a driven sprocket wheel that has a smaller diameter than the driving sprocket wheel and is installed on the rear wheel, which is the drive wheel, and a chain connecting the driving sprocket wheel and the driven sprocket wheel.

In this configuration, when a driver steps on the pedal, the driving sprocket wheel installed integrally with the pedal spins, and at the same time, the rear wheel connected to the driven sprocket wheel by the chain rotates together, thereby moving the bicycle forward.

Meanwhile, the power transmission device installed in the bicycle in this way has a large occupied area and a complex structure. Therefore, there are problems such as driver's clothes getting caught between the driving sprocket wheel and the chain or being contaminated. In particular, when a multistage transmission device is installed on the driven sprocket wheel, there is also a problem that the chain frequently comes off the sprocket wheel during shifting.

Considering these problems, electric bicycles without a power transmission device have been developed and used recently. The electric bicycle includes a drive motor that rotates the rear wheel, which is the drive wheel, a battery that supplies power to the drive motor, and an electronic control device for controlling them. When power is supplied to the drive motor by the electronic control device, the electric bicycle is driven by the drive motor that rotates the wheels.

In addition, the electric bicycle includes a pedal alternator that generates electricity by pedaling. The pedal alternator controls the pedal response according to the driver's preference and converts the driver's pedaling kinetic energy into electrical energy to generate electricity.

The power generated by the pedal alternator is used to supply the drive motor together with battery power. The battery of the electric bicycle may be charged using an external power source or charged by an operation of rotating the pedal alternator using the pedal.

Meanwhile, the electric bicycle without a power transmission device adjusts a pedal load so that the driver may feel pedal feeling as if there is a chain when stepping on the pedal. As a result, the driver may feel the pedal feeling as the pedal effort is formed when the pedal spins.

In this way, the pedal alternator may play the role of adjusting the pedal response so that the driver may feel the pedal feeling. The rotational force generated by electromagnetic elements (rotor and stator) installed inside the pedal alternator provides a driver with an appropriate pedal reaction force through a crank shaft and a crank arm, and the size of the reaction force is controlled by a controller.

In order to control the pedal response with the pedal alternator, the generated power should be consumed by the drive motor or battery. The pedal alternator may control the pedal response through the power consumed by the drive motor or battery. There may be cases where the power generated by the pedal alternator may not be consumed by the drive motor and battery due to regulatory requirements, which will be described below.

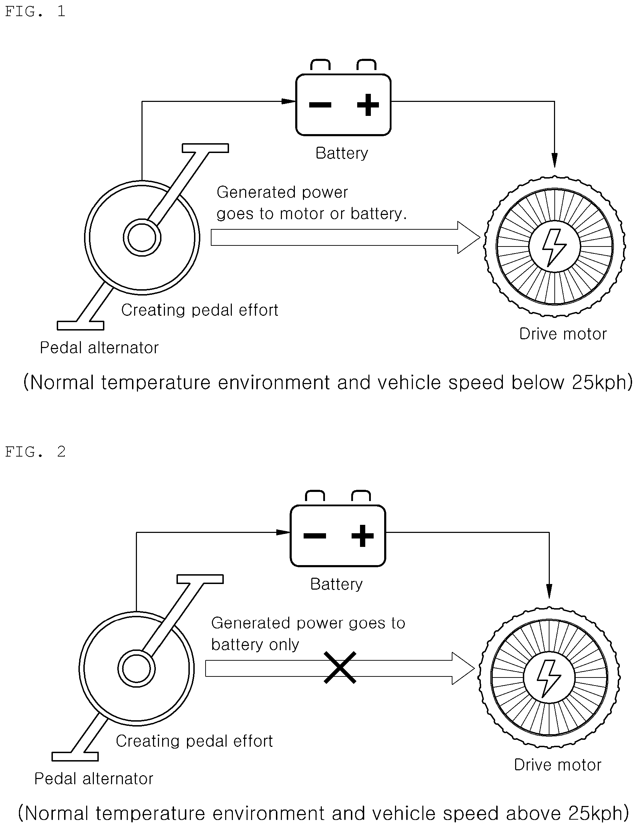

a) Referring to FIG. 1, when the battery of the electric bicycle is in a normal temperature environment and a driving speed of the electric bicycle is less than 25 kph, the drive motor and the battery may consume power generated by the pedal alternator, and the pedal response may be controlled by the pedal alternator.

b) According to the regulatory requirements, the drive motor of the electric bicycle may be prohibited from accelerating a vehicle 25 kph or more. Referring to FIG. 2, when the battery of the electric bicycle is in the normal temperature environment and the driving speed of the electric bicycle is 25 kph or more, the drive motor may no longer consume power generated by the pedal alternator, and the power generated by the pedal alternator is stored in the battery. In this case, the pedal alternator may control the pedal response through the power consumed for charging the battery.

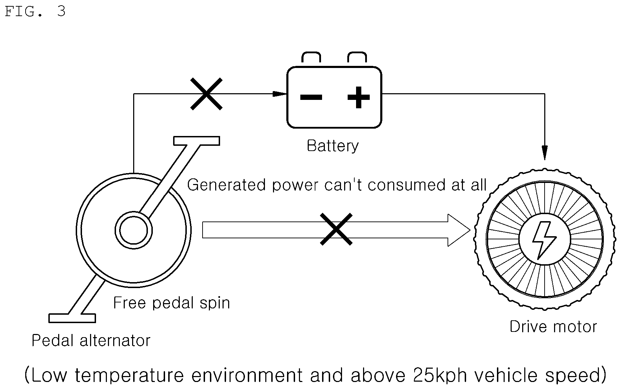

c) In addition, the battery used in the electric bicycle is generally prohibited from being charged at low temperatures to protect battery cells. Referring to FIG. 3, in the environment where the battery of the electric bicycle is prohibited from being charged (temperature at which charging is prohibited may vary depending on the type of battery) and the power generated by the generator may not be consumed (when the vehicle's driving speed is 25 kph or more), the pedal alternator may not control the pedal response to perform the free pedal spin, which causes discomfort to the driver and, in some cases, makes it impossible to maintain postural stability of the electric bicycle, thereby making it a very important issue in terms of stability.

### SUMMARY

As described above, in the case of the existing electric bicycles, there may be cases where the pedal alternator may not control the pedal response in the environment where the power generated by the pedal alternator may not be consumed by the drive motor and battery, which causes discomfort to the driver and reduces the driving stability. Accordingly, the present disclosure aims to overcome the problems of the existing electric bicycles as the technical problems.

More specifically, An object to be achieved by the present disclosure is to provide an electric bicycle that includes a battery heating device consuming power generated by a pedal alternator to easily control pedal response even in an environment where the power generated by the pedal alternator is not be consumed by a drive motor and a battery, thereby providing comfort to a driver and enhancing driving stability, and a method for controlling pedal response of an electric bicycle.

Objects of the present disclosure are not limited to the above-mentioned objects. That is, other objects that are not mentioned may be obviously understood by those skilled in the art from the following description.

An electric bicycle according to an aspect of the present disclosure may include: a drive motor that provides a rotational force to a drive wheel; a battery that supplies power to the drive motor; a pedal alternator that is electrically connected to the drive motor and the battery and provides a pedal reaction force to a driver and converts pedal kinetic energy of the driver into electric energy; and a heating device that is electrically connected to the pedal alternator and is installed on the battery side and is provided to heat the battery when the bicycle is driven.

The battery may include: a battery pack that includes a plurality of battery cells; and a battery tray on which the battery pack is mounted, and the heating device may be installed on the battery tray.

The heating device may be provided as an electric heater including a heating coil.

The electric bicycle according to an aspect of the present disclosure may further include a controller that controls power generated by the pedal alternator to be supplied to at least one of the drive motor, the battery, and the heating device.

The controller may collect driving information including a temperature of the battery and a driving speed of the electric bicycle, and control a supply of power generated by the pedal alternator based on the driving information.

The driving information may further include information on a remaining capacity of the battery.

The electric bicycle according to an aspect of the present disclosure may further include a temperature sensor that detects the temperature of the battery.

The electric bicycle according to an aspect of the present disclosure may further include a speed detection device that measures the driving speed of the electric bicycle.

The electric bicycle according to an aspect of the present disclosure may further include a SOC measurement unit that measures the remaining capacity of the battery.

The controller may control the power generated by the pedal alternator to be supplied to the heating device for consumption in an environment where the power generated by the pedal alternator is not consumed by the drive motor and the battery.

The environment in which the power generated by the pedal alternator is not consumed by the drive motor and the battery may be when a first condition that the temperature of the battery is lower than or equal to or below a set value or the battery is in a fully charged state and a second condition that the driving speed of the electric bicycle is greater than or equal to or above a predetermined value are simultaneously satisfied.

When the temperature of the battery is lower than or equal to or less than the set value and the power generated by the pedal alternator is supplied to the heating device, the controller may control the power generated by the pedal alternator to be supplied to the battery for storage when the temperature of the battery is recovered to a predetermined level or higher.

When the temperature of the battery is recovered to the predetermined level or higher, the controller may control the power generated by the pedal alternator to be simultaneously supplied to the battery and the heating device for a predetermined time or until the temperature of the battery reaches a predetermined value.

The controller may control to cut off the supply of power generated by the pedal alternator to the heating device after the predetermined time has elapsed or after the temperature of the battery reaches the predetermined value.

The heating device may be electrically connected to an external power source provided separately from the pedal alternator and include a connection part for connection to the external power source.

The heating device may be provided so as to receive and consume at least one of power supplied from the pedal alternator, power supplied from the external power source, and power generated by regenerative braking of the drive motor.

In the meantime, according to another aspect of the present disclosure to solve the above problem, a method for controlling pedal response of an electric bicycle including a pedal alternator that provides a pedal reaction force to a driver and converts pedal kinetic energy of the driver into electrical energy, a drive motor that is electrically connected to the pedal alternator and provides a rotational force to a drive wheel, a battery that is electrically connected to the pedal alternator and supplies power to the drive motor, and a heating device that is electrically connected to the pedal alternator and configured to heat the battery includes: an information collection step of collecting driving information including a temperature of the battery and a driving speed of the electric bicycle; and a control step of controlling power generated by the pedal alternator to be supplied to at least one of the drive motor, the battery, and the heating device based on the information collected in the information collection step.

In the information collection step, information on the remaining capacity of the battery may further be collected as the driving information.

In the control step, when any one of the first condition environment in which the temperature of the battery is lower than or equal to or less than a set value and the driving speed of the electric bicycle is greater than or equal to or above a predetermined value and a second condition environment in which the battery is in a fully charged state and the driving speed of the electric bicycle is greater than or equal to the predetermined value or above the predetermined value is applied, the power generated by the pedal alternator may be controlled to be supplied to the heating device.

According to another aspect of the present disclosure, the method for controlling pedal response of an electric bicycle may further include, when the power generated by the pedal alternator is supplied to the heating device in the first condition environment, a subsequent step of controlling the power generated by the pedal alternator to be supplied to the battery for storage when the temperature of the battery is recovered to a predetermined level or higher.

In the subsequent step, the power generated by the pedal alternator may be controlled to be simultaneously supplied to the battery and the heating device for a predetermined time after the supply of the power generated by the pedal alternator to the battery is initiated or until the temperature of the battery reaches the predetermined value.

In the subsequent step, the supply of power generated by the pedal alternator to the heating device may be controlled to be cut off after the predetermined time has elapsed or after the temperature of the battery reaches the predetermined value.

The electric bicycle according to the present disclosure includes the battery heating device consuming the power generated by the pedal alternator to be able to easily control the pedal response even in the environment where the power generated by the pedal alternator is not be consumed by the drive motor and battery, thereby providing comfort to the driver and enhancing the driving stability.

In particular, the present disclosure enables the pedal response control by the pedal alternator even in the low temperature situation where the battery of the electric bicycle cannot be charged, and more specifically, has the following effects.
- Safety enhancement: Since the pedal of the electric bicycle cannot spin freely and the pedal response may be controlled even in the low temperature environment and at the driving speed 25 kph or more, there is no risk of vehicle control becoming loose.
- Power efficiency enhancement: The battery can be quickly recovered or maintained to the chargeable state using the power generated by the pedal alternator or the regenerative braking power of the drive motor. Therefore, it is possible to enhance the power efficiency in that additional power may be charged to the battery without wasting the situation where the battery cannot be charged.
- Comfort enhancement: In very cold areas, the heating device may be operated as the external power source to recover or maintain the battery to the chargeable state, thereby finally charging the battery with the external power source even in the low temperature environment. Therefore, the driver can use the electric bicycle immediately without delay using the quickly charged battery, thereby enhancing comfort.

Effects of the present disclosure are not limited to the effects described above, and other effects that are not mentioned may be obviously understood from the following description.

The effects of the present disclosure are not limited to the aforementioned effects, and other effects, which are not mentioned above, will be apparently understood to a person having ordinary skill in the art from the following description.

The objects to be achieved by the present disclosure, the means for achieving the objects, and the effects of the present disclosure described above do not specify essential features of the claims, and, thus, the scope of the claims is not limited to the disclosure of the present disclosure.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a diagram illustrating that power generated by a generator of an electric bicycle is consumed by a drive motor and a battery in a normal temperature environment and a driving speed of less than 25 kph;
FIG. 2 is a diagram illustrating that the power generated by the generator of the electric bicycle is consumed by the battery in the normal temperature environment and the driving speed of 25 kph or more;
FIG. 3 is a diagram illustrating that the power generated by the generator of the electric bicycle is not consumed by the drive motor and the battery in a low temperature environment and the driving speed of 25 kph or more;
FIG. 4 is a diagram illustrating an electric bicycle according to the present disclosure;
FIGS. 5 and 6 are diagrams illustrating components of a battery applied to the electric bicycle according to the present disclosure, in which FIG. 5 illustrates a battery pack and FIG. 6 illustrates a battery tray on which a battery pack is mounted; and
FIG. 7 is a diagram illustrating a heating device installed in the battery tray of the electric bicycle according to the present disclosure.

### DETAILED DESCRIPTION OF THE EMBODIMENT

Hereinafter, the present disclosure will be described in detail with reference to the attached drawings. The following embodiments are presented to sufficiently convey the idea of the present disclosure to those skilled in the art. The present disclosure is not limited only to the embodiments to be presented below, but may be embodied in other forms. In order to clarify the present disclosure, parts unrelated to the description may be omitted, and a size of components may be slightly exaggerated to aid understanding.

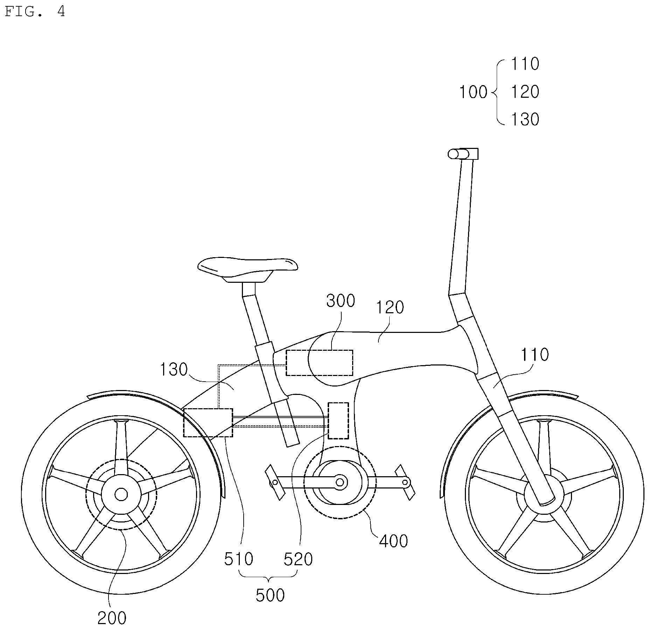

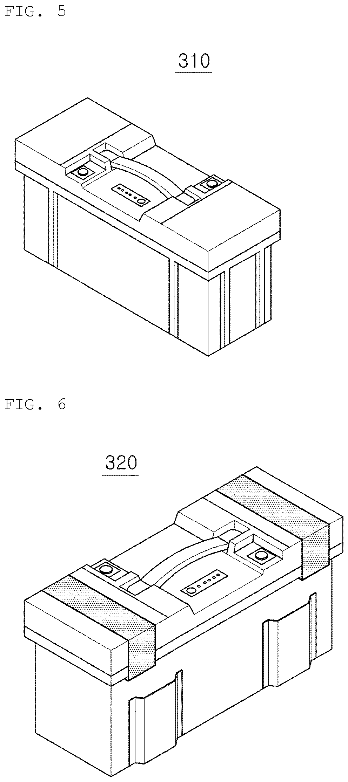

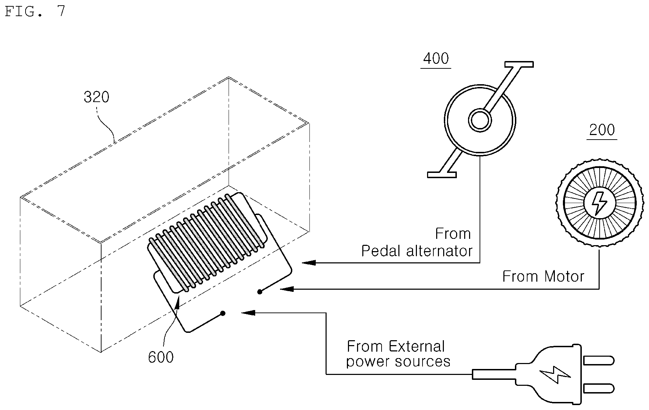

FIG. 4 is a diagram illustrating an electric bicycle according to the present disclosure. FIGS. 5 and 6 are diagrams illustrating components of a battery applied to the electric bicycle according to the present disclosure, in which FIG. 5 illustrates a battery pack and FIG. 6 illustrates a battery tray on which a battery pack is mounted. FIG. 7 is a diagram illustrating a heating device installed in the battery tray of the electric bicycle according to the present disclosure.

Referring to FIG. 4, an electric bicycle according to the present disclosure may be configured to include a frame 100 that constitutes a body, a drive motor 200 that is installed on the frame 100 and provides a rotational force to a drive wheel, a battery 300 that supplies power to the drive motor 200, a pedal alternator 400 that provides a pedal reaction force to a driver and converts driver's pedaling kinetic energy into electric energy and returns the electric energy to the drive motor 200 and/or the battery 300, and a controller 500 that controls the drive motor 200 and the pedal alternator 400 individually or integrally.

The frame 100 may be configured to include a front frame 110, a middle frame 120, and a rear frame 130.

A front wheel is rotatably mounted on the front frame 110. In addition, a handle stem is provided at one end of the front frame 110, and a handle part for steering the electric bicycle may be coupled to an upper portion of the handle stem.

A pedal housing for installing a pedal and a pedal alternator 400 may be provided at a lower portion of the middle frame 120, and a saddle tube for installing a saddle may be provided at an upper end. A pedal alternator 400 is mounted in the pedal housing, and pedals may be rotatably mounted on both sides of the pedal alternator 400. In this case, the housing of the pedal alternator 400 to be described later itself may constitute the pedal housing.

A real wheel is rotatably mounted on the rear frame 130. The drive motor 200 for rotating the rear wheel to move the electric bicycle forward may be mounted at a center of the rear wheel.

The front frame 110, the middle frame 120, and the rear frame 130 are connected by a hinge shaft (not illustrated) penetrating through the frame at one end of each frame, and the plurality of frames 110, 120, and 130 may be folded together by the rotation of the hinge shaft, thereby improving storage and portability. In contrast, the front frame 110, the middle frame 120, and the rear frame 130 may be provided integrally, thereby simplifying the structure and manufacturing process and simultaneously improving the rigidity of the body.

The drive motor 200 may be operated by receiving power from the battery 300, and drives the rear wheel, which is the drive wheel of the electric bicycle, as required by the driver's pedaling. The present embodiment is described as an example in which the rear wheel of the electric bicycle is the drive wheel, but the front wheel may also be provided as the drive wheel. In this case, the drive motor 200 may be installed on the front wheel side.

The battery 300 may be mounted inside the middle frame 120. However, the present disclosure is not limited thereto, and the battery 300 may be mounted inside the front frame 110 or the rear frame 130, or may be mounted on an outside of the frame 100 via a bracket (not illustrated) to ensure smooth maintenance.

Referring to FIG. 5, the battery 300 of the electric bicycle according to the present disclosure may include a battery pack 310 and a battery tray 320 on which the battery pack 310 is mounted.

The battery pack 310 is configured by connecting a plurality of battery cells in a series or parallel or serial-parallel mixing manner appropriately according to the desired voltage, capacity, and discharge amount and integrating the battery cells into one, thereby performing a charge/discharge process. The battery pack 310 may be charged by receiving power generated by the pedal alternator 400, and discharge the power stored in the battery pack 310 to be supplied as the driving power of the drive motor 200. Although not illustrated in the drawing, the battery pack 310 may include a SOC (State of Charge) measurement unit for measuring the remaining capacity.

More specifically, the battery pack 310 is formed by assembling a plurality of battery modules which are formed by assembling a plurality of battery cells, and has the advantage of being easily mountable on and removable from the device.

The battery tray 320 may support the battery pack 310 and be mounted on the frame 100 side, and protect the battery pack 310 provided on the inside thereof from physical impact of the external environment. The battery tray 320 may be made of a steel material so as to withstand heat generated from a heating device 600, and may have an accommodation space provided on the inside thereof to accommodate the battery pack 310. In addition, the battery tray 320 may include a cover that maintains and protects the battery pack 310 mounted in the accommodation space.

The pedal alternator 400 is provided to convert the rotational force of the pedal generated by the driver's effort into the electrical energy. The electrical energy converted by the pedal alternator 400 may be supplied as driving power of the drive motor 200 or stored in the battery 300.

The pedal alternator 400 may be configured to include a housing, a crank shaft that is installed to penetrate through the housing and having pedals provided at both ends, a gear unit that is accommodated inside the housing and provided to increase or decrease the rotational force of the pedal, and a power generation unit that is accommodated inside the housing and includes a rotor and a stator to generate electricity through electromagnetic interaction.

The housing may be provided in a cylindrical shape having a hollow space inside and mounted inside the pedal housing provided at one end of the middle frame 120. As described above, the housing of the pedal alternator 400 may be provided integrally with the pedal housing. That is, the housing of the pedal alternator 400 itself constitutes the pedal housing, thereby reducing component elements and simplifying the structure.

The crank shaft is installed so as to penetrate through the housing, and pedals may be rotatably installed on each end portions of the crank shaft protruding outside the housing, respectively. A bearing is provided between the housing and the crank shaft to reduce wear between component elements while ensuring the smooth rotation of the crank shaft relative to the housing.

The gear unit increases or decreases the rotational force of the pedal, thereby increasing the power generation efficiency of the power generation unit that generates electricity by the rotational force of the gear unit. The gear unit and the power generation unit may be disposed continuously along an axial direction around the crank shaft in the internal space of the housing. The gear unit is provided so that an input side is connected to the crank shaft and rotates at an increased or decreased speed, and the power generation unit may be connected to the output side of the gear unit at a speed increased or decreased relative to the rotational speed of the input side of the gear unit.

For example, the gear unit may include a speed increasing unit composed of a carrier, a planetary gear, a sun gear, a ring gear, etc., and may be composed of a single speed increasing unit or composed in a form in which a plurality of speed increasing units are arranged in series in multiple stages.

For example, the gear unit may perform a two-stage speed increasing function, including a first speed increasing unit and a second speed increasing unit. The first speed increasing unit of the gear unit may include a first carrier that is fixed to a crank shaft and transmits a rotational force of a pedal, a plurality of first planetary gears that are supported by the first carrier and revolve and rotate about the crank shaft as a central axis by the rotation of the first carrier, a first sun gear that is installed around the crank shaft and meshes with the plurality of first planetary gears to rotate together with the rotation of the first planetary gear, and a first ring gear that is provided on an inner wall of the housing and meshes with an outer circumference of the first planetary gear to rotate together with the revolution of the first planetary gear. The first carrier is fixedly installed around the crank shaft, and when a driver steps on a pedal to spin, the crank shaft and the first carrier fixed thereto rotate together. The first carrier also serves to support the plurality of first planetary gears meshing between the first sun gear and the first ring gear at equal intervals. The plurality of first planetary gears may be arranged to form a single set, and mesh between the first sun gear and the first ring gear to revolve and rotate about the crank shaft as the central axis. A hollow is formed in the center of the first sun gear so that the crank shaft may pass therethrough. The first sun gear rotates on the crank shaft by meshing with the plurality of first planetary gears on the outer circumference thereof. The bearing may be interposed between the crank shaft and the first sun gear.

The second speed increasing unit of the gear unit may include a second carrier that is fixed to the first sun gear and transmit a rotational force, a plurality of second planetary gears that are supported by the second carrier and revolve and rotate about the crank shaft as the central axis by the rotation of the second carrier, a second sun gear that is installed around the crank shaft and meshes with the plurality of second planetary gears to rotate together with the rotation of the second planetary gear, and a second ring gear that is provided on the inner wall of the housing and meshes with an outer circumference of the second planetary gear to rotate together with the revolution of the second planetary gear. The second carrier is installed around the crank shaft and rotates together with the rotation of the first sun gear. The second carrier may be provided integrally in a form that protrudes around the first sun gear. The second carrier also serves to support the plurality of second planetary gears meshing between the second sun gear and the second ring gear at equal intervals. The plurality of second planetary gears may be arranged to form a single set, and mesh between the second sun gear and the second ring gear to revolve and rotate about the crank shaft as the central axis. A hollow is formed in the center of the second sun gear so that the crank shaft may pass therethrough. The second sun gear rotates on the crank shaft by meshing with the plurality of second planetary gears on the outer circumference thereof. The bearing may be interposed between the crank shaft and the second sun gear.

In the gear unit of the present embodiment, the first carrier rotating by the crank shaft in the first speed increasing unit forms an input side, and the first sun gear rotating between the plurality of first planetary gears forms an output side. When the first carrier of the first speed increasing unit rotates, the plurality of first planetary gears revolve and rotate along an inner circumference of the first ring gear, and accordingly, the first sun gear meshing with the first planetary gear speeds up and rotates. In the second speed increasing unit, the second carrier rotating by the first sun gear forms an input side, and the second sun gear rotating between the plurality of second planetary gears forms an output side. When the second carrier of the second speed increasing unit rotates, the plurality of second planetary gears revolve and rotate along an inner circumference of the second ring gear, and accordingly, the second sun gear meshing with the second planetary gear speeds up and rotates.

That is, the first speed increasing unit and the second speed increasing unit are connected in series in two stages to increase the rotational force input by the pedal. When the greater speed increase is required, the gear unit of the present embodiment may be configured to include three or more speed increasing units connected in series.

The power generation unit may include a rotor that is coupled to the output side of the gear unit and rotates, and a stator that electromagnetically interacts with the rotor.

The rotor may be provided to rotate by the gear unit. To this end, the rotor of the present embodiment may be coupled to the second sun gear, which is the final output side of the gear unit. The rotor may have a plurality of permanent magnets on an inner circumference thereof, and may be configured to surround an outer circumference of the stator in a radial direction. In addition, the stator may have a plurality of coils wound. The stator may be installed around the crank shaft, and the bearing may be interposed between the crank shaft and the stator.

As described above, the pedal alternator 400 according to the present embodiment is configured to include a power transmission structure connected to the crank shaft-gear unit-power generation unit. Hereinafter, the operation of the pedal alternator 400 that generates electricity using the rotational force of the pedal will be briefly described.

First, when the driver steps on the pedal to spin, the first carrier rotates due to the rotation of the crank shaft. When the first carrier rotates, the first planetary gear revolves and rotates along the inner circumference of the first ring gear, and accordingly, the first sun gear meshed with the first planetary gear rotates. Through this process, the rotational speed of the pedal is primarily increased.

Next, the second carrier of the second speed increasing unit rotates due to the rotation of the first sun gear of the first speed increasing unit. When the second carrier rotates, the second planetary gear revolves and rotates along the inner circumference of the second ring gear, and accordingly, the second sun gear meshed with the second planetary gear rotates. Through this process, the rotational speed of the pedal is secondarily increased.

Subsequently, the second sun gear rotates the rotor of the power generation unit, and accordingly, electricity may be generated by the electromagnetic interaction between the rotor and the stator. The generated electricity may be supplied as the driving power of the drive motor 200 or stored in the battery 300.

The controller 500 may individually control the drive motor 200 and the pedal alternator 400 or controlled integrally. In the present embodiment, the controller 500 may include a first electronic control unit 510 connected to the drive motor 200 side and a second electronic control unit 520 connected to the pedal alternator 400 side.

The drive motor 200 may be electrically connected to the first electronic control unit 510 built in the rear frame 130, and the pedal alternator 400 may be electrically connected to the second electronic control unit 520 built in the middle frame 120. Here, the installation positions of the first electronic control unit 510 and the second electronic control unit 520 are not necessarily limited as described above. Since each of the frames 110, 120, and 130 constituting the electric bicycle according to the present disclosure has an accommodation space provided inside thereof, it is natural that components such as the battery 300 and the electronic control units 510 and 520 may be moved and disposed in frames at positions different from those illustrated in the drawings.

In addition, the controller 500 of the present embodiment may be integrally provided without being separated into two electronic control units 510 and 520. Even when the controller 500 is provided in an integrated form, any one of the front frame 110, the middle frame 120, and the rear frame 130 may be appropriately selected and disposed.

In addition, the controller 500 of the present embodiment may be configured separately outside the drive motor 200 or the pedal alternator 400, but may also be configured in a form included inside the drive motor 200 or the pedal alternator 400. This may be individually applied to two electronic control units 510 and 520 constituting the controller 500. For example, the first electronic control unit 510 connected to the drive motor 200 may be configured inside or outside the drive motor 200, and the second electronic control unit 520 connected to the pedal alternator 400 may be configured inside or outside the pedal alternator 400.

Meanwhile, the existing electric bicycles have a problem in that the pedal alternator may not control the pedal response in the environment where the power generated by the pedal alternator may not be consumed by the drive motor and battery, thereby causing discomfort to the driver and reducing the driving stability. Accordingly, the electric bicycle according to the present embodiment is provided to provide comfort to the driver and ensure the driving safety by generating the pedal response to the pedaling even in such an environment.

To this end, the electric bicycle according to the present disclosure further includes the heating device 600 that enables the power generated by the pedal alternator 400 to be consumed in the environment where the power generated by the pedal alternator 400 may not be consumed by the drive motor 200 and the battery 300.

Referring to FIG. 7, the heating device 600 of the present disclosure may be preferably installed on the battery tray 320 side among the components of the battery 300. The heating device 600 may be provided as an electric heater that generates heat by flowing electricity through a heating coil, and electrically connected to the pedal alternator 400 to receive the power generated by the pedal alternator 400.

In addition, the heating device 600 may be configured to be connected to an external power source in addition to the pedal alternator 400 to receive external power, and may be provided with a connector (connection part) for connection to the external power source.

In the present embodiment, the heating device 600 is preferably installed in the battery tray 320. Since the battery pack 310 may change in model depending on suppliers, considering compatibility, the heating device 600 is configured to be installed in the battery tray 320 rather than being mounted in the battery pack 310 itself. More preferably, the heating device 600 may be installed on a bottom surface of the inside of the battery tray 320.

The environment in which the power generated by the pedal alternator 400 may not be consumed by the drive motor 200 and the battery 300 may mean a case in which the following two conditions are satisfied at the same time.
<Condition 1> As the case where the charging of the battery 300 is prohibited, the case of the low temperature environment in which the temperature of the battery 300 is less than or equal to or below a predetermined value (which may be set differently depending on the manufacturing type of the battery), or the case where the battery pack 310 of the battery 300 is in a fully charged state (full SOC).
<Condition 2> The case where the driving speed of the electric bicycle is greater than or equal to or above the predetermined value (usually 25 kph or more, but may be set differently depending on regulatory requirements).

When the two conditions are satisfied, the power generated by the pedal alternator 400 may not be consumed by the drive motor 200 and the battery 300. The present disclosure allows the heating device 600 to consume the power generated by the pedal alternator 400 in such a situation, thereby controlling the pedal response.

In addition, the present disclosure may enable the battery 300 to quickly recover to a state where it may be charged again when the charging of the battery 300 is prohibited due to the low temperature environment by installing the heating device 600 on the battery tray 320 side.

Furthermore, the heating device 600 of the present disclosure may consume the power generated by the regenerative braking of the drive motor 200, and may also enable the battery 300 to recover from the low temperature environment by using external power if necessary. In particular, in an extremely low temperature environment where the temperature is very low, only the power generated by the regenerative braking of the drive motor 200 may not be sufficient to drive the heating device 600, and there may also be a need to quickly heat the battery 300. Therefore, according to the present embodiment, the heating device 600 may be configured to be driven by receiving power from an external power source.

The electric bicycle according to the present disclosure may further include a temperature sensor (not illustrated) for detecting the temperature of the battery 300 and a speed detection device (not illustrated) for measuring the driving speed of the vehicle.

The temperature sensor (not illustrated) may be installed inside the battery tray 320 to measure the temperature of the battery 300, and the speed detection device (not illustrated) may be installed on the wheel or crank of the electric bicycle and use a method of measuring cadence (the number of rotations of the crank per minute) or any other known methods.

Hereinafter, a pedal response control operation according to a specific situation of the electric bicycle according to the present disclosure having the above configuration will be described in detail.
a) In the condition that when the battery 300 of the electric bicycle is in a normal temperature environment (when the value measured by the temperature sensor is higher than or equal to or above a predetermined value) and the driving speed (measured by the speed detection device) of the electric bicycle is less than or equal to or less than the predetermined value, the drive motor 200 and the battery 300 may control the pedal response by consuming the power generated by the pedal alternator 400. In this case, when the battery 300 is in a fully charged state (full SOC), only the drive motor 200 consume the power generated by the pedal alternator 400 to control the pedal response.
b) In the condition that when the battery of the electric bicycle is in the normal temperature environment (when the value measured by the temperature sensor is greater than or equal to or above a predetermined value) and the driving speed (measured by the speed detection device) of the electric bicycle is greater than or equal to or above a predetermined value, the drive motor 200 may not consume the power generated by the pedal alternator 400, and the battery 300 may consume the power generated by the pedal alternator 400 in the form of charging the power generated by the pedal alternator 400, thereby controlling the pedal response. In this case, when the battery 300 is in the fully charged state (full SOC), the battery 300 may also not consume the power generated by the pedal alternator 400. In this case, the pedal response should be controlled by allowing the heating device 600 to consume the power generated by the pedal alternator 400.
c) In the condition that when the battery of the electric bicycle is in the low temperature environment (when the value measured by the temperature sensor is lower than or equal to or less than the predetermined value) and the driving speed (measured by the speed detection device) of the electric bicycle is greater than or equal to or above the predetermined value, since both the drive motor 200 and the battery 300 may not consume the power generated by the pedal alternator 400, the pedal response is controlled by allowing the heating device 600 to consume the power generated by the pedal alternator 400.

The method for controlling pedal response of an electric bicycle according to the present disclosure according to the situation is summarized in a table as follows. In the table below, 'a' means a temperature value at which the charging of the battery 300 is prohibited, and is a value that may be set differently depending on the manufacturing type of the battery. In addition, 'b' in the table below means a driving speed value at which acceleration of the drive motor 200 is prohibited, and is a value that may be set differently depending on the regulatory requirements.

**[Table 1]**

| Temperature of battery (t) | Driving speed (s) | Remaining capacity of battery | Pedal reaction control |
|---|---|---|---|
| t > a (or t ≥ a) | S < b (or s ≤ b) | not Full SOC | Power generated by pedal alternator |
| | | | Consumed by drive motor and battery |
| | | Full SOC | Power generated by pedal alternator |
| | | | Consumed by drive motor |
| | S > b (or s ≥ b) | not Full SOC | Power generated by pedal alternator |
| | | | Consumed by battery |
| | | Full SOC | Power generated by pedal alternator |
| | | | Consumed by heating device |
| t < a (or t ≤ a) | S < b (or s ≤ b) | not Full SOC | Power generated by pedal alternator |
| | | | Consumed by drive motor |
| | | Full SOC | Power generated by pedal alternator |
| | | | Consumed by drive motor |
| | S > b (or s ≥ b) | not Full SOC | Power generated by pedal alternator |
| | | | Consumed by heating device |
| | | Full SOC | Power generated by pedal alternator |
| | | | Consumed by heating device |

The pedal response control of the electric bicycle according to the present disclosure as described above may be performed by the controller 500.

More specifically, the controller 500 of the present disclosure may collect the information on the temperature of the battery 300 measured by the temperature sensor (not illustrated), the driving speed of the vehicle measured by the speed detection device (not illustrated), and the remaining capacity of the battery 300, and perform control to open or block the circuit to supply the power generated by the pedal alternator 400 to at least one of the drive motor 200, the battery 300, and the heating device 600 based on the collected information.

In addition, in the electric bicycle according to the present disclosure, as the temperature of the battery 300 is formed less than or equal to or less than a predetermined value 'a', when the power generated by the pedal alternator 400 is consumed by the heating device 600 to perform the pedal response control, the controller 500 continuously collects the information on the temperature of the battery 300, and when the temperature of the battery 300 is recovered to a predetermined level or higher, the power generated by the pedal alternator 400 may be supplied to the battery 300 to perform the pedal response control.

When the temperature of the battery 300 is above the predetermined value 'a' due to the operation of the heating device 600, the controller 500 may control the power generated by the pedal alternator 400 to be supplied to the battery 300 for storage immediately or with a time delay. This is based on the assumption that the battery 300 is not in the fully charged state (full SOC) .

In addition, even in this case, since the electric bicycle according to the present disclosure will be placed in the low temperature environment, even if the temperature of the battery 300 is above the predetermined value 'a', the source of the power generated by the pedal alternator 400 is not immediately switched from the heating device 600 to the battery 300, but rather, the battery 300 and the heating device 600 may be controlled to simultaneously consume the power generated by the pedal alternator 400 for a predetermined time. Alternatively, the heating device 600 may be controlled to continue to operate until the battery 300 reaches a stable temperature, for example, until the temperature of the battery 300 reaches another set value 'c'.

The method for controlling pedal response of an electric bicycle according to the present disclosure may include: an information collection step (S100) of collecting the information on the temperature of the battery 300 mounted on the electric bicycle and the driving speed of the electric bicycle; a control step (S200) of controlling the power generated by the pedal alternator 400 to be supplied to at least one of the drive motor 200, the battery 300, and the heating device 600 based on the information collected in the information collection step (S100).

In the information collection step (S100), the temperature of the battery 300 may be measured by the temperature sensor (not illustrated) installed inside the battery tray 320, and the driving speed of the electric bicycle may be measured by the speed detection device (not illustrated) installed on the wheel or crank of the wheel.

In addition, in the information collection step (S100), the information on the remaining capacity of the battery 300 may be additionally collected. The remaining capacity of the battery 300 may be measured by a SOC measurement unit (not illustrated).

The information on the temperature of the battery 300 measured by the temperature sensor (not illustrated), the driving speed of the electric bicycle measured by the speed detection device (not illustrated), and the remaining capacity of the battery 300 measured by the SOC measurement unit (not illustrated) are transmitted to the controller 500.

In the control step (S200), the controller 500 may perform control to open or block a circuit to supply the power generated by the pedal alternator 400 to at least one of the drive motor 200, the battery 300, and the heating device 600 based on the information collected in the information collection step (S100). Such control may be performed by an operation of opening or blocking a circuit electrically connecting the pedal alternator 400, the drive motor 200, the battery 300, and the heating device 600, respectively.

In the control step (S200), when "the temperature of the battery 300 is less than or equal to or less than a first set value and the driving speed of the electric bicycle is greater than or equal to or above a predetermined value (first condition environment)" and "the battery 300 is in the fully charged state (full SOC) and the driving speed of the electric bicycle is greater than or equal to the predetermined value (second condition environment)," the controller 500 may control the power generated by the pedal alternator 400 to be supplied to the heating device 600 for consumption.

In addition, in the control step (S200), when the power generated by the pedal alternator 400 is supplied to and consumed by the heating device 600 due to the first condition environment, the method for controlling pedal response of an electric bicycle according to the present disclosure may further include a subsequent step (S300) of controlling the power generated by the pedal alternator 400 to be supplied to the battery 300 when the temperature of the battery 300 is recovered to the predetermined level or higher later.

To this end, the controller 500 may continuously collect the information on the temperature of the battery 300 measured in real time by the temperature sensor (not illustrated).

In the subsequent step (S300), when the temperature of the battery 300 is above a first set value (when the temperature is higher than or above the first set value), the controller 500 may control the power generated by the pedal alternator 400 to be supplied to the battery 300 immediately or with a predetermined time delay so that the power may be stored.

In addition, in the subsequent step (S300), the controller 500 may control the power generated by the pedal alternator 400 to simultaneously supply the generated power of the pedal alternator 400 to the battery 300 and the heating device 600 for consumption for a predetermined time from the time when the supply of the power generated by the pedal alternator 400 to the battery 300 is initialized or to simultaneously supply the power generated by the pedal alternator 400 to the battery 300 and the heating device 600 for consumption until the temperature of the battery 300 reaches a second set value.

After the predetermined time has elapsed from the time when the power generated by the pedal alternator 400 is supplied to the battery 300 or when the temperature of the battery 300 reaches the second set value, the controller 500 may cut off the supply of power generated by the pedal alternator 400 to the heating device 600.

Hereinabove, the electric bicycle according to the present disclosure includes the battery heating device consuming the power generated by the pedal alternator to easily control the pedal response even in the environment where the power generated by the pedal alternator is not consumed by the drive motor and battery, thereby providing comfort to the driver and enhancing the driving stability.

## Claims

1. An electric bicycle, comprising:
a drive motor that provides a rotational force to a drive wheel;
a battery that supplies power to the drive motor;
a pedal alternator that is electrically connected to the drive motor and the battery and provides a pedal reaction force to a driver and converts pedal kinetic energy of the driver into electric energy; and
a heating device that is electrically connected to the pedal alternator and is installed on the battery side and is provided to heat the battery when the bicycle is driven.

2. The electric bicycle according to claim 1, wherein the battery includes:
a battery pack that includes a plurality of battery cells; and
a battery tray on which the battery pack is mounted, and the heating device is installed on the battery tray.

3. The electric bicycle according to claim 1, further comprising:
a controller that controls power generated by the pedal alternator to be supplied to at least one of the drive motor, the battery, and the heating device.

4. The electric bicycle according to claim 3, wherein the controller collects driving information including a temperature of the battery, a driving speed of the electric bicycle and a remaining capacity of the battery, and controls a supply of power generated by the pedal alternator based on the driving information.

5. The electric bicycle according to claim 4, wherein the controller controls the power generated by the pedal alternator to be supplied to the heating device for consumption in an environment where the power generated by the pedal alternator is not consumed by the drive motor and the battery.

6. The electric bicycle according to claim 5, wherein the environment in which the power generated by the pedal alternator is not consumed by the drive motor and the battery is when a first condition that the temperature of the battery is lower than or equal to or below a set value or the battery is in a fully charged state and a second condition that the driving speed of the electric bicycle is greater than or equal to or exceed a predetermined value are simultaneously satisfied.

7. The electric bicycle according to claim 6, wherein when the temperature of the battery is lower than or equal to or less than the set value and the power generated by the pedal alternator is supplied to the heating device, the controller controls the power generated by the pedal alternator to be supplied to the battery for storage when the temperature of the battery is recovered to a predetermined level or higher.

8. The electric bicycle according to claim 7, wherein when the temperature of the battery is recovered to the predetermined level or higher, the controller controls the power generated by the pedal alternator to be simultaneously supplied to the battery and the heating device for a predetermined time or until the temperature of the battery reaches a predetermined value.

9. The electric bicycle according to claim 8, wherein the controller controls to cut off the supply of power generated by the pedal alternator to the heating device after the predetermined time has elapsed or after the temperature of the battery reaches the predetermined value.

10. The electric bicycle according to claim 3, wherein the heating device is additionally connected to an external power source provided separately from the pedal alternator and includes a connection part for connection to the external power source, and
the heating device is provided so as to receive and consume at least one of power supplied from the pedal alternator, power supplied from the external power source, and power generated by regenerative braking of the drive motor.

11. A method for controlling pedal response of an electric bicycle including a pedal alternator that provides a pedal reaction force to a driver and convert pedal kinetic energy of the driver into electrical energy, a drive motor that is electrically connected to the pedal alternator and provides a rotational force to a drive wheel, a battery that is electrically connected to the pedal alternator and supplies power to the drive motor, and a heating device that is electrically connected to the pedal alternator and configured to heat the battery, the method comprising:
an information collection step of collecting driving information including a temperature of the battery, a driving speed of the electric bicycle and a remaining capacity of the battery; and
a control step of controlling power generated by the pedal alternator to be supplied to at least one of the drive motor, the battery, and the heating device based on the information collected in the information collection step.

12. The method according to claim 11, wherein in the control step, when any one of the first condition environment in which the temperature of the battery is lower than or equal to or less than a set value and the driving speed of the electric bicycle is greater than or equal to or above a predetermined value and a second condition environment in which the battery is in a fully charged state and the driving speed of the electric bicycle is greater than or equal to the predetermined value or above the predetermined value is applied, the power generated by the pedal alternator is controlled to be supplied to the heating device.

13. The method according to claim 12, further comprising:
when the power generated by the pedal alternator is supplied to the heating device in the first condition environment, a subsequent step of controlling the power generated by the pedal alternator to be supplied to the battery for storage when the temperature of the battery is recovered to a predetermined level or higher.

14. The method according to claim 13, wherein in the subsequent step, the power generated by the pedal alternator is controlled to be simultaneously supplied to the battery and the heating device for a predetermined time after the supply of the power generated by the pedal alternator to the battery is initiated or until the temperature of the battery reaches the predetermined value.

15. The method according to claim 14, wherein in the subsequent step, the supply of power generated by the pedal alternator to the heating device is controlled to be cut off after the predetermined time has elapsed or after the temperature of the battery reaches the predetermined value.

## Amended claims

### Amended claims in accordance with Rule 137(2) EPC.

1. An electric bicycle, comprising:
a drive motor (200) configured to provide a rotational force to a drive wheel;
a battery (300) configured to supply power to the drive motor (200);
a pedal alternator (400) that is electrically connected to the drive motor (200) and the battery (300) and is configured to provide a pedal reaction force to a driver and to convert pedal kinetic energy of the driver into electric energy;
a heating device (600) that is electrically connected to the pedal alternator (400) and is installed on the battery side and is provided to heat the battery (300) when the bicycle is driven, and
a controller (500) configured to control power generated by the pedal alternator (400) to be supplied to at least one of the drive motor (200), the battery (300), and the heating device (600),
wherein the controller (500) is configured to:
collect driving information including a temperature of the battery (300) and a driving speed of the electric bicycle, and
control a supply of power, generated by the pedal alternator (400), based on the driving information to the heating device (600),
wherein the controller (500) is configured to control the power generated by the pedal alternator (400) to be supplied to the heating device (600) in an environment where the power generated by the pedal alternator (400) is not consumed by the drive motor (200) and the battery (300), so that the heating device (600) consumes the power generated by the pedal alternator (400) to control the pedal reaction force.

2. The electric bicycle according to claim 1, wherein the battery (300) includes:
a battery pack (310) that includes a plurality of battery cells; and
a battery tray (320) on which the battery pack (310) is mounted, and
the heating device (600) is installed on the battery tray (320).

3. The electric bicycle according to claim 1, wherein the driving information further includes a remaining capacity of the battery.

4. The electric bicycle according to claim 3, wherein the environment in which the power generated by the pedal alternator (400) is not consumed by the drive motor (200) and the battery (300) is when a first condition that the temperature of the battery (300) is lower than or equal to or below a set value or the battery (300) is in a fully charged state and a second condition that the driving speed of the electric bicycle is greater than or equal to or exceed a predetermined value are simultaneously satisfied.

5. The electric bicycle according to claim 4, wherein when the temperature of the battery (300) is lower than or equal to or less than the set value and the power generated by the pedal alternator (400) is supplied to the heating device (600), the controller (500) controls the power generated by the pedal alternator (400) to be supplied to the battery (300) for storage when the temperature of the battery (300) is recovered to a predetermined level or higher.

6. The electric bicycle according to claim 5, wherein the controller (500) is configured to control, when the temperature of the battery (300) is recovered to the predetermined level or higher, the power generated by the pedal alternator (400) to be simultaneously supplied to the battery (300) and the heating device (600) for a predetermined time or until the temperature of the battery (300) reaches a predetermined value.

7. The electric bicycle according to claim 6, wherein the controller (500) is configured to cut off the supply of power generated by the pedal alternator (400) to the heating device (600) after the predetermined time has elapsed or after the temperature of the battery (300) reaches the predetermined value.

8. The electric bicycle according to claim 1, wherein the heating device (600) is additionally connected to an external power source provided separately from the pedal alternator (400) and includes a connection part for connection to the external power source, and
the heating device (600) is provided so as to receive and consume at least one of power supplied from the pedal alternator (400), power supplied from the external power source, and power generated by regenerative braking of the drive motor (200).

9. A method for controlling pedal response of the electric bicycle of claim 1, the method comprising:
an information collection step of collecting driving information including a temperature of the battery (300)and a driving speed of the electric bicycle; and
a control step of controlling a supply of power generated by the pedal alternator (400) to be supplied to at least one of the drive motor, the battery, and the heating device (600) based on the information collected in the information collection step,
wherein in the control step, the power generated by the pedal alternator (400) is controlled to be supplied to the heating device (600) in an environment where the power generated by the pedal alternator (400) is not consumed by the drive motor (200) and the battery (300), so that the heating device (600) consumes the power generated by the pedal alternator (400) to control the pedal reaction force.

10. The method according to claim 9, wherein in the control step, when any one of a first condition environment, in which the temperature of the battery (300) is lower than or equal to or less than a set value and the driving speed of the electric bicycle is greater than or equal to or above a predetermined value, and a second condition environment, in which the battery (300) is in a fully charged state and the driving speed of the electric bicycle is greater than or equal to the predetermined value or above the predetermined value is applied, the power generated by the pedal alternator (400) is controlled to be supplied to the heating device (600).

11. The method according to claim 10, further comprising:
when the power generated by the pedal alternator (400) is supplied to the heating device (600) in the first condition environment, a subsequent step of controlling the power generated by the pedal alternator (400) to be supplied to the battery (300) for storage when the temperature of the battery (300) is recovered to a predetermined level or higher.

12. The method according to claim 11, wherein in the subsequent step, the power generated by the pedal alternator (400) is controlled to be simultaneously supplied to the battery (300) and the heating device (600) for a predetermined time after the supply of the power generated by the pedal alternator (400) to the battery is initiated or until the temperature of the battery (300) reaches the predetermined value.

13. The method according to claim 12, wherein in the subsequent step, the supply of power generated by the pedal alternator (400) to the heating device (600) is controlled to be cut off after the predetermined time has elapsed or after the temperature of the battery (300) reaches the predetermined value.
